# EUROPEAN PATENT SPECIFICATION

(11) **EP 0 515 029 B1**
(45) Date of publication and mention of the grant of the patent: **26.06.1996**
(21) Application number: 92303378.1
(22) Date of filing: 15.04.1992
(51) Int. Cl.: H04B 7/24

(54) **Time-division multiplex communication system**
Zeit-Multiplexkommunikationssystem
Système de communication à multiplexage temporel

(30) Priority: 19.04.1991 JP 87073/91
(43) Date of publication of application: 25.11.1992
(73) Proprietor: NEC CORPORATION, Tokyo (JP)
(72) Inventor: Arai, Koju, Minato-ku, Tokyo (JP)
(74) Representative: Orchard, Oliver John

(56) References cited:
- EP-A- 0 260 696
- FR-A- 2 608 874
- ELECTRICAL COMMUNICATION vol. 63, no. 3, 1989, ROMFORD,GB pages 200 - 210; H. K.LIGOTKY: 'RURTEL:A Microwave System for Rural Telecommunication'

## Description

The present invention relates to a time-division multiplex communication system.

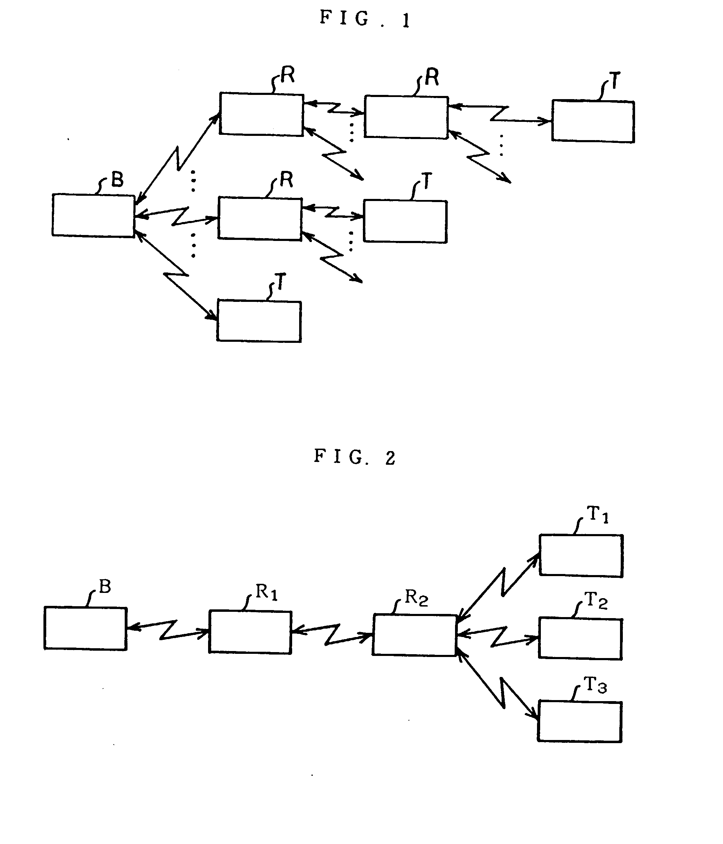

Mention will first be made of a time-division multiplex communication system that was proposed in the specification of a Japanese patent application No. 2-153016 dated July 12 1990, which was laid open to inspection on February 14 1992 under number 4-44434, with reference to Figs. 1 and 2 of the accompanying drawings in which:-
FIG. 1 is a block schematic diagram of the previously proposed time-division multiplex communication system, and
FIG. 2 is a block schematic diagram illustrative of the loop-back function of each of repeater stations of the time-division multiplex communication system shown in FIG. 1;

The previously proposed time-division multiplex communication system comprises a single master station B, a plurality of repeater stations R, and a plurality of slave stations T, these stations B, R, T being connected in a hierarchical network. The master station B and any one of the slave stations T communicate with each other when a down frame signal indicating the station number of the slave station T is transmitted from the master station B to the slave station T directly or through a repeater station or stations R, and an up burst signal is transmitted from the slave station T, which is permitted to transmit the signal, to the master station B directly or through the repeater station or stations R.

In the previously proposed time-division multiplex communication system, to prevent up burst signals transmitted by plural repeater stations R and plural slave stations T from overlapping in time, the up burst signal are adjusted with respect to delay times by the repeater stations R and the slave stations T, as will be explained below. To compensate for the difference between radio wave delays due to the distance between the stations, the up burst signal are delayed depending on the distance between the stations. To compensate for the difference between radio wave delays due to the difference between the numbers of layers or levels from the master station B, the up burst signals are delayed by certain times depending on the number of layers from the master station B. In order for each of the repeater and slave stations R, T to be able to automatically recognize its number of layers from the master station B, the master station B transmits a down frame signal with a repeater number, and the repeater number is incremented by "1" in each of the repeater and slave stations R, T.

Each of the repeater stations of the previously proposed time-division multiplex communication system has a loop-back function to allow slave stations to communicate with each other in the event of a failure of a repeater station. If a repeater station R₁ in the first layer of a time-division multiplex communication system shown in FIG. 2 fails to operate, a repeater station R₂ in the second layer loses frame synchronization or is in frame asynchronization because it cannot receive a down frame signal from the repeater station R₁. At this time, the repeater station R₂ performs its loop-back function to generate a substitute down frame signal by itself, and transmits signals, which are composed of the substitute down frame signal with up burst signals from slave stations T₁ - T₃, to the slave stations T₁- T₃. As a result, there is established a network with the repeater station R₂ acting as a virtual master station, allowing the slave station T₁ - T₃ to communicate with each other.

This earlier time-division multiplex communication system is however disadvantageous in that its hardware arrangement is relatively large in scale due to a delay circuit required by each of the repeater stations to delay an up burst signal from a slave station into timed relationship to its own substitute down frame signal when they are added to each other by the loop-back function.

In the specification of French patent application number 8617862, which was published under number 2608874 on June 24 1988 and in the specification of the corresponding United States patent number 4,827,474, there was proposed a method of adjusting the interstate delay in an information transmission system having a large number of relay stations arranged in cascade and using in one transmission direction the TDMA method, in which the delay adjustment starts with the relay station nearest to the central station and ends with a terminal station.

A subsidiary station capable of automatically adjusting an internal delay in response to a number signal received in a downward signal by the subsidiary station was proposed in the specification of European patent application number 87113623.0, which was published under number 260 696 on March 23 1988.

A feature of a time-division multiplex communication system which will be described below in illustration of the present invention is that it does not require each repeater station to delay an up burst signal from a slave station when the up burst signal and a down frame signal are added to each other by a loop-back function.

In the particular embodiment to be described below a time-division multiplex communication system includes a master station for transmitting a first down frame signal accompanied by a predetermined first repeater number, a group of repeater stations each for transmitting a second down frame signal accompanied by a second repeater number, and a group of slave stations each for transmitting an up burst signal which is delayed by a fixed delay time corresponding to a third repeater number that is calculated by adding a predetermined number to a second repeater number transmitted from a repeater station which is a master with respect thereto. The master, repeater, and slave stations are connected at different layers in a hierarchical network. Each of the repeater stations comprises frame synchronization determining means for determining whether to be in frame synchronization or frame asynchronization; loop-back means for looping back the up burst signal transmitted from either one of the slave stations or another of the repeater stations which is a slave with respect thereto, when the frame synchronization determining means determines to be in frame asynchronization, and repeater number calculating means for calculating a second repeater number thereof depending on a number of layers from the master station based on the first repeater number when the frame synchronization determining means determines to be in frame synchronization, and for equalizing the second repeater number thereof to the first repeater number irrespective of the number of layers from said master station when the frame synchronization determining means determines to be in frame asynchronization.

The following description and drawings disclose, by means of an example, the invention which is characterised in the appended claims, whose terms determine the extent of the protection conferred hereby.

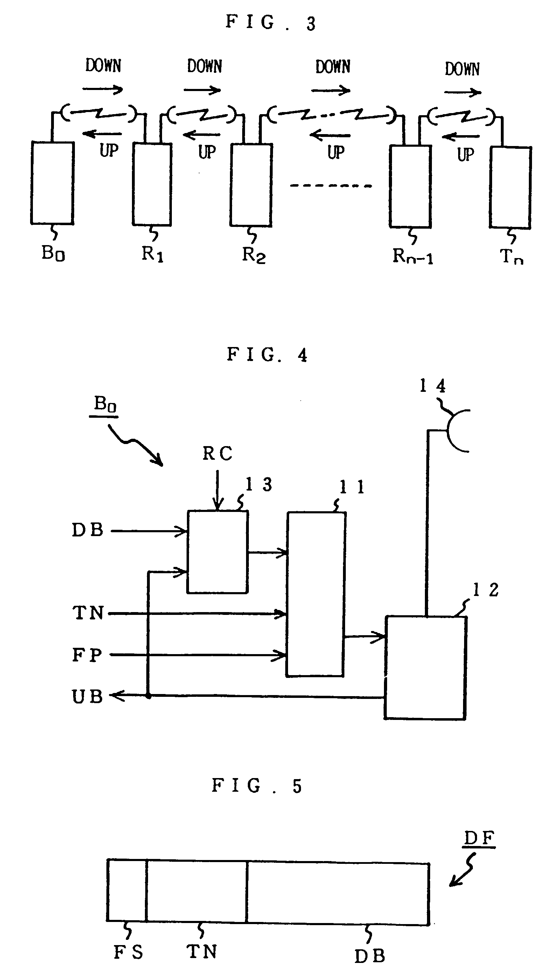

In the drawings:-
FIG. 3 is a block diagram of a time-division multiplex communication system according to the present invention;
FIG. 4 is a block diagram of a master station of the time-division multiplex communication system shown in FIG. 3;
FIG. 5 is a diagram showing the format of a down frame signal DF;

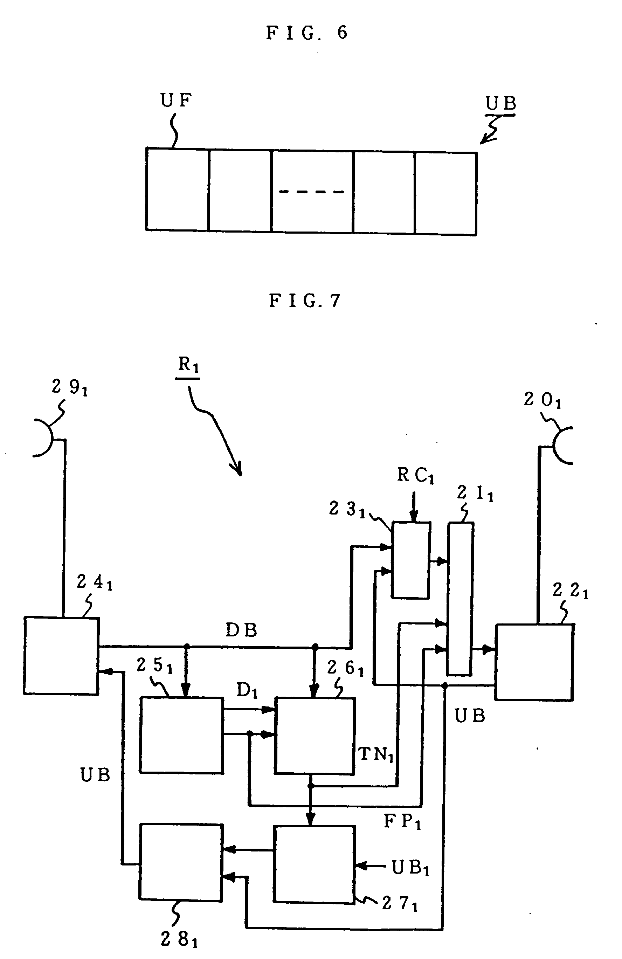

FIG. 6 is a diagram showing the format of an up burst signal UB;
FIG. 7 is a block diagram of a first repeater station of the time-division multiplex communication system shown in FIG. 3;

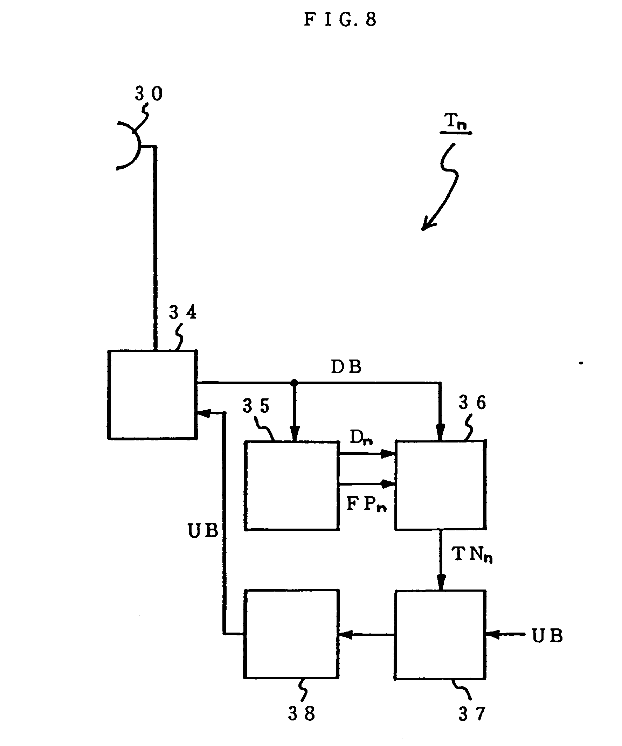

FIG. 8 is a block diagram of a slave station of the time-division multiplex communication system shown in FIG. 3;

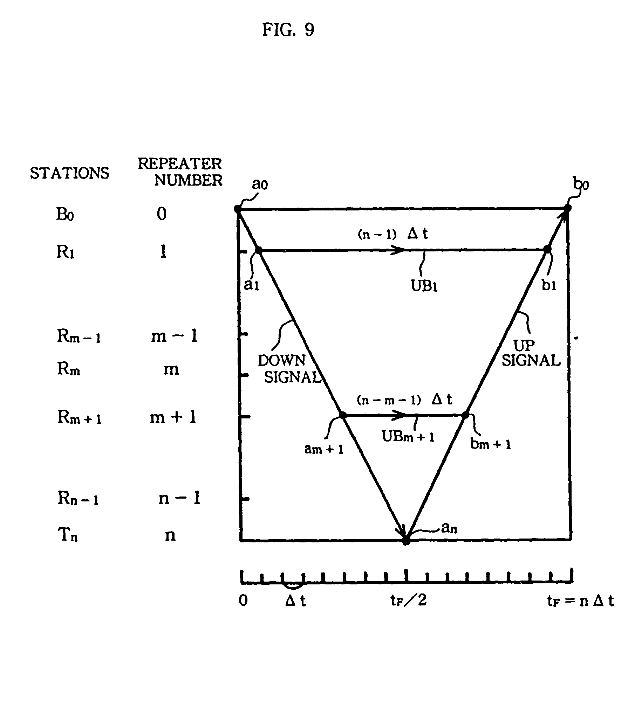

FIG. 9 is a diagram showing the manner in which the time-division multiplex communication system shown in FIG. 3 operates when all repeater and slave stations are in frame synchronization; and

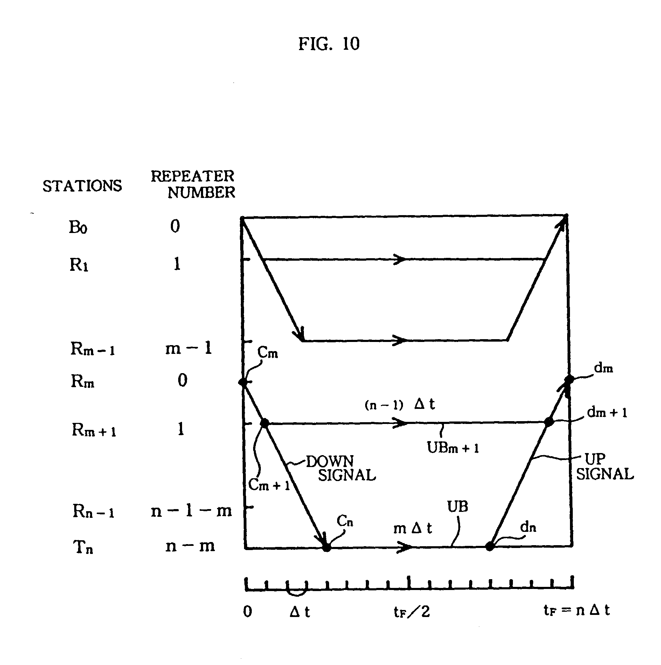

FIG. 10 is a diagram showing the manner in which the time-division multiplex communication system shown in FIG. 3 operates when an (m-l)th repeater station and an mth repeater station are in frame asynchronization.

FIG. 3 shows a time-division multiplex communication system according to the present invention. The time-division multiplex communication system shown in FIG. 3 comprises a master station B₀ , (n-1) repeater stations R₁ - Rₙ₋₁ connected in series to the master station B₀, and a slave station Tₙ connected to the (n-1)th repeater station Rₙ₋₁.

As shown in FIG. 4, the master station B₀ includes a multiplexer 11, a modulator-demodulator 12, a loop-back circuit 13, and an antenna 14. The master station B₀ also includes a down baseband signal generator (not shown) for generating a down baseband signal DB, a repeater number signal generator (not shown) for generating a repeater number signal TN, a frame pulse generator (not shown) for generating a frame pulse FP, a loop-back control signal generator (not shown) for generating a loop-back control signal RC, and an up burst signal processor (not shown) for processing an up burst signal UB.

The multiplexer 11 adds a frame synchronization pattern FS and the repeater number signal TN to the down baseband signal DB from the loop-back control circuit 13 using the frame pulse FP as a reference, thereby generating a down frame signal DF shown in FIG. 5. The repeater number signal TN is representative of a predetermined repeater number RN₀ of the master station B₀.

The modulator-demodulator 12 modulates an output signal from the multiplexer 11 into a down signal in a radio frequency range, which is transmitted through the antenna 14 to the first repeater station R₁. The modulator-demodulator 12 also demodulates an up signal in a radio frequency range, received by the antenna 14, into a up burst signal UB shown in FIG. 6.

The loop-back circuit 13 supplies either the down baseband signal DB as it is to the multiplexer 11 or a signal composed of the down baseband signal DB and the up burst signal UB to the multiplexer 11 depending on the loop-back control signal RC applied to the loop-back circuit 13.

As shown in FIG. 7, the first repeater station R₁ comprises a first antenna 20₁, a multiplexer 21₁, a first modulator-demodulator 22₁, a loop-back circuit 23₁, a second modulator-demodulator 24₁, a frame synchronization circuit 25₁, a repeater number calculating circuit 26₁, a fixed delay circuit 27₁, a delay adjusting circuit 28₁, a second antenna 29₁, a loop-back control signal generator (not shown) for generating a first loop-back control signal RC₁, and an up burst signal generator (not shown) for generating a first up burst signal UB₁. The second modulator-demodulator 24₁ demodulates a down signal in a radio frequency range received by the second antenna 29₁ into a down baseband signal DB. The down baseband signal DB is supplied to the frame synchronization circuit 25₁, the repeater number calculating circuit 26₁, and the loop-back circuit 23₁. The frame synchronization circuit 25₁ serves to determine whether the first repeater station R₁ is in frame synchronization or not based on whether the down baseband signal DB contains a frame synchronization pattern FS or not, and produces a first decision signal D₁ indicative of the result of determination. The first decision signal D₁ is supplied to the repeater number calculating circuit 26₁. The frame synchronization circuit 25₁ generates a first frame pulse FP₁ in synchronism with the frame synchronization pattern FS when it determines that the first repeater station R₁ is in frame synchronization, and generates a first frame pulse FP₁ out of synchronism with the frame synchronization pattern FS when it determines that the first repeater station R₁ is in frame asynchronization. The first frame pulse FP₁ is supplied to the multiplexer 21₁ and the repeater number calculating circuit 26₁.

When the repeater number calculating circuit 26₁ recognizes that the first repeater station R₁ is in frame synchronization based on the first decision signal D₁, the repeater number calculating circuit 26₁ extracts the repeater number signal TN from the down baseband signal DB using the first frame pulse FP₁ as a reference, thereafter adds "1" to the repeater number RN₀ indicated by the repeater number signal TN, thus producing a first repeater number RN₁, and generates a first repeater number signal TN₁ representing the first repeater number RN₁. When the repeater number calculating circuit 26₁ recognizes that the first repeater station R₁ is in frame asynchronization based on the first decision signal D₁, the repeater number calculating circuit 26₁ generates a first repeater number signal TN₁ representing the repeater number RN₀ of the master station B₀. The first repeater number signal TN₁ is supplied to the multiplexer 21₁ and the fixed delay circuit 27₁. The multiplexer 21₁ adds the first repeater number signal TN₁ to the down baseband signal DB using the first frame pulse FP₁ as a reference, generating a new down frame signal DF. The modulator-demodulator 22₁ modulates an output signal from the multiplexer 21₁ into a down signal in a radio frequency range which is transmitted through the first antenna 20₁ to the second repeater station R₂. The modulator-demodulator 22₁ also demodulates an up signal in a radio frequency range, received by the first antenna 20₁, into an up burst signal UB which is supplied to the loop-back circuit 23₁ and the delay adjusting circuit 28₁.

Depending on the first loop-back control signal RC₁, the loop-back circuit 23₁ supplies the down baseband signal DB as it is to the multiplexer 21₁ or a signal composed of the down baseband signal DB and the up burst signal UB to the multiplexer 21₁. The fixed delay circuit 27₁ delays the first up burst signal UB₁ by a delay time corresponding to the repeater number indicated by the first repeater number signal TN₁. The delayed first up burst signal UB₁ is applied to the delay adjusting circuit 28₁. The delay adjusting circuit 28₁ adds the first up burst signal UB₁ to the up burst signal UB, generating a new up burst signal UB, and thereafter delays the new up burst signal UB by a delay time corresponding to the distance up to the master station B₀. The delayed new up burst signal UB is supplied to the second modulator-demodulator 24₁. The second modulator-demodulator 24₁ modulates the new up burst signal UB into an up signal in a radio frequency range which is transmitted through the second antenna 29₁ to the master station B₀.

The other (n-2) repeater stations R₂- Rₙ₋₁ are identical in structure to the first repeater station R₁.

As shown in FIG. 8, the slave station Tn comprises an antenna 30, a multiplexer 34, a frame synchronization circuit 35, a repeater number calculating circuit 36, a fixed delay circuit 37, a delay adjusting circuit 38, and an up burst signal generator (not shown) for generating an up burst signal UB. The modulator-demodulator 34 demodulates a down signal in a radio frequency range, received by the antenna 30, into a down baseband signal DB. The down baseband signal DB is supplied to the frame synchronization circuit 35 and the repeater number calculating circuit 36. The frame synchronization circuit 35 determines whether the slave station Tₙ is in frame synchronization or not based on whether the down baseband signal DB contains a frame synchronization pattern FS or not, and produces an nth decision signal Dₙ indicative of the result of determination. The nth decision signal Dₙ is supplied to the repeater number calculating circuit 36. The frame synchronization circuit 35 generates an nth frame pulse FPₙ in synchronism with the frame synchronization pattern FS when it determines that the slave station Tₙ is in frame synchronization, and generates an nth frame pulse FPₙ out of synchronism with the frame synchronization pattern FS when it determines that the slave station Tₙ is in frame asynchronization. The nth frame pulse FPₙ is supplied to the repeater number calculating circuit 36.

When the repeater number calculating circuit 36 recognizes that the slave station Tₙ is in frame synchronization based on the nth decision signal Dₙ, the repeater number calculating circuit 36 extracts the (n-1)th repeater number signal TNₙ₋₁ from the down baseband signal DB using the nth frame pulse FPₙ as a reference, thereafter adds "1" to the repeater number indicated by the (n-1)th repeater number signal TNₙ₋₁, thus producing an nth repeater number signal TNₙ. The nth repeater number signal TNₙ is supplied to the fixed delay circuit 37. The fixed delay circuit 37 delays the up burst signal UB by a delay time corresponding to the nth repeater number RNₙ indicated by the nth repeater number signal TNₙ. The delayed up burst signal UB is applied to the delay adjusting circuit 38. The delay adjusting circuit 38 delays the up burst signal UB by a delay time corresponding to the distance up to the (n-1)th repeater station Rₙ₋₁. The delayed up burst signal UB is supplied to the modulator-demodulator 34. The modulator-demodulator 34 modulates the up burst signal UB into an up signal in a radio frequency range which is transmitted through the antenna 30 to the (n-1)th repeater station Rₙ₋₁.

The fixed delay circuits 27₁ - 27ₙ₋₁ of the repeater stations R₁ - Rₙ₋₁ and the fixed delay circuit 37 of the slave station Tₙ have respective fixed delay times DL₁ - DLₙ which are given from the first through nth repeater numbers RN₁ - RNₙ, the frame period t_{F} of the down frame signal DF, and the unit delay time Δt according to the following equation:${\text{DL}}_{\text{m}} {\text{= (n - (RN}}_{\text{m}} {\text{- RN}}_{\text{0}} \text{))· Δt}$ where m = 1, 2, ..., n-1, n${\text{Δt = t}}_{\text{F}} \text{/n}$

Operation of the time-division multiplex communication system shown in FIG. 3 when all of the repeater stations R₁ - Rₙ₋₁ and the slave station Tₙ are in frame synchronization and also when the (m-1)th repeater station Rₘ₋₁ and the mth repeater station Rₘ are in frame asynchronization, will be described below.

First, the operation at the time all of the repeater stations R₁ - Rₙ₋₁ and the slave station Tₙ are in frame synchronization will be described below with reference to FIG. 9. For the sake of brevity, it is assumed that the down frame signal DF and the up burst signal UB are delayed only by a distance, and the repeater stations R₁ - Rₙ₋₁ and the slave station Tₙ are spaced at an equivalent distance ΔL = L/(2 · n) where L indicates a distance such that the time required for the down frame signal DF to travel from the master station B₀ to the slave station Tₙ and subsequently for the up burst signal UB to travel from the slave station Tₙ to the master station B₀ is equal to the frame period t_{F}. However, even if the actual distances between the repeater stations R₁ - Rₙ₋₁ and the slave station Tₙ are different from the equivalent distance ΔL, no substantial difference will arise because delay time differences caused by the difference between the actual distances and the equivalent distance are adjusted by the delay adjusting circuits 28₁ - 28ₙ₋₁, 38.

When the down baseband signal DB, the repeater number signal TN indicating the repeater number RN₀ = 0, and the frame pulse FP are applied to the multiplexer 11 in the master station B₀, the multiplexer 11 generates a down frame signal DF. The down frame signal DF is modulated by the modulator-demodulator 12 into a down signal in a radio frequency range. The down signal is transmitted through the antenna 14 to the first repeater station R₁ at a time a₀ (FIG. 9), and thereafter received by the second antenna 29₁ of the first repeater station R₁ at a time a₁ which lags the time a₀ by a unit delay time Δ t.

The down signal is demodulated into a down baseband signal DB by the second modulator-demodulator 24₁ of the first repeater station R₁. The frame synchronization circuit 25₁ detects a frame synchronization pattern FS contained in the down baseband signal DB, and supplies a first decision signal D₁ indicative of frame synchronization and a first frame pulse FP₁ synchronous with the frame synchronization pattern FS to the repeater number calculating circuit 26₁. The repeater number calculating circuit 26₁ extracts a repeater number signal TN contained in the down baseband signal DB using the first frame pulse FP₁ as a reference, and adds "1" to the repeater number RN₀ = 0 represented by the repeater number signal TN, thus producing a first repeater number RN₁. As a result, the repeater number calculating circuit 26₁ generates a first repeater number signal TN₁ indicative of the first repeater number RN₁ = 1. The first repeater number signal TN₁ is supplied to the fixed delay circuit 27₁ whose fixed delay time DL₁ is set to (n - 1) · Δt according to the equation (1). To transmit a first up burst signal UB₁ from the first repeater station R₁ back to the master station B₀, therefore, the first up burst signal UB₁ is delayed to a time b₁ by the fixed delay circuit 27₁, and thereafter supplied to the delay adjusting circuit 28₁. The delay adjusting circuit 28₁ adds the up burst signal UB from the modulator-demodulator 22₁ and the first up burst signal UB₁, generating a new up burst signal UB. The new up burst signal UB is adjusted with respect to the delay time by the delay adjusting circuit 28₁ so that it is received by the master station B₀ at a time b₀. As a consequence, the up burst signal UB is received by the master station B₀ such that the up frame UF of the up burst signal UB shown in FIG. 6 and the frame synchronization pattern FS of the down frame signal DF shown in FIG. 5 are timed to each other, i.e., they occur at the same time. The multiplexer 21₁ adds the first repeater number signal TN₁ to the down baseband signal DB using the first frame pulse FP₁ as a reference, generating a new down frame signal DF. The new down frame signal DF is then modulated by the modulator-demodulator 22₁ into a down signal in a radio frequency range which is transmitted through the first antenna 20₁ to the second repeater station R₂.

The remaining repeater stations R₂ - Rₙ₋₁ operate in the same manner as the first repeater station R₁. More specifically, the down signal in a radio frequency range transmitted from the mth repeater station Rₘ is received by the second antenna 29ₘ₊₁ of the (m+1)th repeater station Rₘ₊₁ at a time aₘ₊₁ which lags the time a₀ by the unit delay time Δt multiplied by (m + 1). The received down signal is then demodulated into an mth down baseband signal DBₘ by the second modulator-demodulator 24ₘ₊₁ of the (m+1)th repeater station Rₘ₊₁. The frame synchronization circuit 25ₘ₊₁ detects a frame synchronization pattern FS contained in the mth down baseband signal DBₘ, and supplies an (m+1)th decision signal Dₘ₊₁ indicative of frame synchronization and an (m+1)th frame pulse FPₘ₊₁ synchronous with the frame synchronization pattern FS to the repeater number calculating circuit 26ₘ₊₁. The repeater number calculating circuit 26ₘ₊₁ extracts an mth repeater number signal TNₘ contained in the mth down baseband signal DBₘ using the (m+1)th frame pulse FPₘ₊₁ as a reference, and adds "1" to the mth repeater number RNₘ = m represented by the mth repeater number signal TNₘ, thus producing an (m+1)th repeater number RNₘ₊₁. As a result, the repeater number calculating circuit 26ₘ₊₁ generates an (m+1)th repeater number signal TNₘ₊₁ indicative of the (m+1)th repeater number RNₘ₊₁ = m + 1. The (m+1) th repeater number signal TNₘ₊₁ is supplied to the fixed delay circuit 27ₘ₊₁ whose fixed delay time DLₘ₊₁ is set to (n - m - 1) · Δ t according to the equation (1). To transmit an (m+1)th up burst signal UBₘ₊₁ from the (m+1)th repeater station Rₘ₊₁ back to the master station B₀, therefore, the (m+1)th up burst signal UBₘ₊₁ is delayed to a time bₘ₊₁ by the fixed delay circuit 27ₘ₊₁, and thereafter supplied to the delay adjusting circuit 28ₘ₊₁. The delay adjusting circuit 28ₘ₊₁ adds the up burst signal UB from the modulator-demodulator 22ₘ₊₁ and the (m+1)th up burst signal UBₘ₊₁, generating a new up burst signal UB. The new up burst signal UB is adjusted with respect to the delay time by the delay adjusting circuit 28ₘ₊₁ so that it is received by the master station B₀ at a time b₀. As a consequence, the up burst signal UB is received by the master station B₀ such that the up frame UF of the up burst signal UB and the frame synchronization pattern FS of the down frame signal DF are timed to each other. The multiplexer 21ₘ₊₁ adds the (m+1)th repeater number signal TNₘ₊₁ to the mth down baseband signal DBₘ using the (m+1)th frame pulse FPₘ₊₁ as a reference, generating a new down frame signal DF. The new down frame signal DF is then modulated by the modulator-demodulator 22ₘ₊₁ into a down signal in a radio frequency range which is transmitted through the first antenna 20ₘ₊₁ to the (m+2)th repeater station Rₘ₊₂.

In the slave station Tₙ, the down signal in a radio frequency range transmitted from the (n-1)th repeater station Rₙ₋₁ is received by the antenna 30 at a time aₙ which tags the time a₀ by the unit delay time Δ t multiplexed by n. The received down signal is then demodulated into a down baseband signal DB by the modulator-demodulator 34. The frame synchronization circuit 35 detects a frame synchronization pattern FS contained in the down baseband signal DB, and supplies an nth decision signal Dₙ indicative of frame synchronization and an nth frame pulse FPₙ synchronous with the frame synchronization pattern FS to the repeater number calculating circuit 36. The repeater number calculating circuit 36 extracts an (n-1)th repeater number signal TNₙ₋₁ contained in the down baseband signal DB using the nth frame pulse FPₙ as a reference, and adds "1- to the (n-1)th repeater number RNₙ₋₁ = n - 1 represented by the (n-1)th repeater number signal TNₙ₋₁, thus producing an nth repeater number RNₙ. As a result, the repeater number calculating circuit 36 generates an nth repeater number signal TNₙ indicative of the nth repeater number RNₙ = n. The nth repeater number signal TNₙ is supplied to the fixed delay circuit 37 whose fixed delay time DLn is set to "0" according to the equation (1). To transmit an up burst signal UB from the slave station Tₙ back to the master station B₀, therefore, the up burst signal UB is supplied to the delay adjusting circuit 38 without being delayed. The delay adjusting circuit 38 adjusts the delay time of the up burst signal UB so that it is received by the master station B₀ at a time b₀. As a consequence, the up burst signal UB is received by the master station B₀ such that the up frame UF of the up burst signal UB and the frame synchronization pattern FS of the down frame signal DF are timed to each other. The new down frame signal DF is modulated by the modulator-demodulator 34 into an up signal in a radio frequency range which is transmitted through the antenna 30 to the (n-1)th repeater station Rₙ₋₁.

The operation at the time the (m-1)th repeater station Rₘ₋₁ and the mth repeater station Rₘ are in frame asynchronization will be described below with reference to FIG. 10.

Communication from the master station B₀ to the (m-1)th repeater station Rₘ₋₁ is carried out in the same manner as described above where all of the repeater stations R₁ - Rₙ₋₁ and the slave station Tₙ are in frame synchronization. However, since the mth repeater station Rₘ is unable to receive a down signal in a radio frequency range from the (m-1)th repeater station Rₘ₋₁, the frame synchronization circuit 25ₘ does not detect a frame synchronization pattern FS. Consequently, the frame synchronization circuit 25ₘ supplies an mth decision signal Dₘ indicating frame asynchronization and an mth frame pulse FPₘ asynchronous with the frame synchronization pattern FS to the repeater number calculating circuit 26ₘ. Inasmuch as the mth decision signal Dₘ indicates frame asynchronization, the repeater number calculating circuit 26ₘ sets the mth repeater number RNₘ to "0" which is the repeater number RN₀ of the master station B₀, and hence generates an mth repeater number signal TNₘ indicative of the mth repeater number RNₘ = "0". The mth repeater number RNₘ is then supplied to the multiplexer 21ₘ, which adds the same to the frame synchronization pattern FS using the mth frame pulse FPₘ as a reference, generating a new down frame signal DF. The new down frame signal DF is modulated by the modulator-demodulator 22ₘ into a down signal in a radio frequency range which is transmitted through the antenna 20ₘ to the (m+1)ah repeater station Rₘ₊₁.

In the (m+1)th repeater stations Rₘ₊₁, the down signal in a radio frequency range transmitted from the mth repeater station Rₘ is received by the second antenna 29ₘ₊₁ at a time Cₘ₊₁ which lags a time cₘ (see FIG. 10) by the unit delay time Δt. The received down signal is then demodulated into an mth down baseband signal DBₘ by the second modulator-demodulator 24ₘ₊₁. The frame synchronization circuit 25ₘ₊₁ detects a frame synchronization pattern FS contained in the mth down baseband signal DBₘ, and supplies an (m+1)th decision signal Dₘ₊₁ indicative of frame synchronization and an (m+1)th frame pulse FPₘ₊₁ synchronous with the frame synchronization pattern FS to the repeater number calculating circuit 26ₘ₊₁. The repeater number calculating circuit 26ₘ₊₁ extracts an mth repeater number signal TNₘ contained in the mth down baseband signal DBₘ using the (m+1)th frame pulse FPₘ₊₁ as a reference, and adds "1" to the mth repeater number RNₘ = 0 represented by the mth repeater number signal TNₘ, thus producing an (m+1)th repeater number signal TNₘ₊₁ indicative of an (m+1)th repeater number RNₘ₊₁ = 1. The (m+1)th repeater number signal TNₘ₊₁ is supplied to the fixed delay circuit 27ₘ₊₁ whose fixed delay time DLₘ₊₁ is set to (n - 1) · Δt according to the equation (1). To transmit an (m+1)th up burst signal UBₘ₊₁ from the (m+1)th repeater station Rₘ₊₁ back to the mth repeater station Rₘ, therefore, the (m+1)th up burst signal UBₘ₊₁ is delayed to a time dₘ₊₁ by the fixed delay circuit 27ₘ₊₁, and thereafter supplied to the delay adjusting circuit 28ₘ₊₁. The delay adjusting circuit 28ₘ₊₁ adds the up burst signal UB from the modulator-demodulator 22ₘ₊₁ and the (m+1)th up burst signal UBₘ₊₁, generating a new up burst signal UB. The new up burst signal UB is adjusted with respect to the delay time by the delay adjusting circuit 28ₘ₊₁ so that it is received by the mth repeater station Rₘ at a time dₘ. As a consequence, the up burst signal UB is received by the mth repeater station Rₘ such that the up frame UF of the up burst signal UB and the frame synchronization pattern FS of the down frame signal DF are timed to each other. At the multiplexer 21ₘ₊₁, by multiplexing the (m+1)th repeater number signal TNₘ₊₁to the mth down baseband signal DBₘ using the (m+1)th frame pulse FPₘ₊₁ as a reference, a new down frame signal is generated. The new down frame signal DF is then modulated by the modulator-demodulator 22ₘ₊₁ into a down signal in a radio frequency range which is transmitted through the first antenna 20ₘ₊₁ to the (m+2)th repeater station Rₘ₊₂.

In the slave station Tₙ, the down signal in a radio frequency range transmitted from the (n-1)th repeater station Rₙ₋₁ is received by the antenna 30 at a time cₙ which lags the time cₙ by the unit delay time Δ t multiplied by (n - m). The received down signal is then demodulated into a down baseband signal DB by the modulator-demodulator 34. The frame synchronization circuit 35 detects a frame synchronization pattern FS contained in the down baseband signal DB, and supplies an nth decision signal Dₙ indicative of frame synchronization and an nth frame pulse FPₙ synchronous with the frame synchronization pattern FS to the repeater number calculating circuit 36. The repeater number calculating circuit 36 extracts an (n-1)th repeater number signal TNₙ₋₁ contained in the down baseband signal DB using the nth frame pulse FPₙ as a reference, and adds "1" to the (n-1)th repeater number RNₙ₋₁ = n - m - 1 represented by the (n-1)th repeater number signal TNₙ₋₁, thus producing an nth repeater number RNₙ. As a result, the repeater number calculating circuit 36 generates an nth repeater number signal TNₙ indicative of the nth repeater number RNₙ = n - m. The nth repeater number signal TNₙ is supplied to the fixed delay circuit 37 whose fixed delay time DLn is set to m · Δ t according to the equation (1). To transmit an up burst signal UB from the slave station Tₙ back to the mth repeater station Rₘ, therefore, the up burst signal UB is delayed to a time dₙ by the fixed delay circuit 37 and supplied to the delay adjusting circuit 38. The delay adjusting circuit 38 adjusts the delay time of the up burst signal UB so that it is received by the mth repeater station Rₘ at a time dₘ. As a consequence, the up burst signal UB is received by the mth repeater station Rₘ such that the up frame UF of the up burst signal UB and the frame synchronization pattern FS of the down frame signal DF are timed to each other. The new down frame signal DF is modulated by the modulator-demodulator 34 into an up signal in a radio frequency range which is transmitted through the antenna 30 to the (n-1)th repeater station Rₙ₋₁.

Therefore, even when the (m-1)th repeater station Rₘ₋₁ and the mth repeater station Rₘ are in frame asynchronization, a network with the mth repeater station Rₘ as a virtual master station can be set up by operating the loop-back circuit 23ₘ of the mth repeater station Rₘ. Since the mth repeater station Rₘ receives the up burst signal UB such that the up frame UF of the up burst signal UB and the frame synchronization pattern FS of the down frame signal DF are timed to each other, the down frame signal DF and the up burst signal can be added to each other without delaying the up burst signal UB.

The illustrated embodiment is particularly directed to a time-division multiplex communication system which comprises master, repeater, and slave stations that are connected in series to each other. However, the principles of the present invention are more practical and advantageous when embodied in a time-division multiplex communication system comprising master, repeater, and slave stations that are connected in a hierarchical network.

While the invention has been disclosed in conjunction with a preferred embodiment thereof, by way of example, it will be appreciated that it would be possible for any person skilled in the art to put the invention into practice in various other ways within the scope of the appended claims.

## Claims

1. A time-division multiplex communication system including: a base station (B₀) for transmitting a first down frame signal (DF₁) accompanied by a predetermined first repeater number (RN₀), a group of repeater stations (Rₙ) each for transmitting a second down frame signal (DF₂) accompanied by a second repeater number (RN₁) and a group of terminal stations (Tₙ) each for transmitting an up burst signal (UB) which is delayed by a fixed delay time corresponding to a third repeater number (RN₂) that is calculated by adding a predetermined number to a second repeater number (RN₁) transmitted from a repeater station (Rₘ) which is a respective master station, the base station (B₀), the group of repeater stations (Rₙ), and the group of terminal stations (Tₙ) being connected at different layers in a hierarchical network, each one of the repeater stations (Rₙ), including frame synchronization determining means (25₁) for determining whether the group of repeater stations (Rₙ) is in frame synchronization or frame asynchronization, loop-back means (23₁) for looping back the up burst signal (UB) transmitted from either one of the terminal stations (Tₙ), or another of the repeater stations (Rₙ) which is a slave with respect to one of the terminal or repeater stations, when the frame synchronization determining means (25₁) determines the group of repeater stations (Rₙ) to be in frame asynchronization, and repeater number calculating means (26₁) for calculating a second repeater number (RN₁) depending on the number of layers of the second repeater from the base station (B₀) based on the first repeater number (RN₀) when the frame synchronization determining means (25₁) determines the group of repeater stations (Rₙ) to be in frame synchronization, and for setting the second repeater number (RN₁) to be equal to the first repeater number (RN₀), irrespective of the number of layers that the second repeater number (RN₁) is from the base station (B₀) when the frame synchronization determining means (25₁) determines the group of repeater stations (Rₙ) to be in frame asynchronization.

2. A time-division multiplex communication system according to claim 1, wherein the first repeater number (RN₀) is "0", the repeater number calculating means (26₁) calculating the second repeater number (RN₁) by adding "1" to either the first repeater number (RN₀) transmitted from the base station (B₀) or the second repeater number (RN₁) transmitted from another of the group of repeater stations (Rₙ) which is a master with respect to the group of repeater stations (Rₙ), when the frame synchronization determining means (25₁) determines that the group of repeater stations (Rₙ) is in frame synchronization, each of the terminal stations (Tₙ) including repeater number calculating means (36) for calculating the third repeater number (RN₂) by adding "1" to the second repeater number (RN₁) transmitted from one of the group of repeater stations (Rₙ) which is a master with respect to the group of repeater stations (Rₙ).

3. A time-division multiplex communication system according to either claim 1 or claim 2, wherein each of the terminal stations (Tₙ) includes fixed delay means (37) for delaying the up burst signal (UB) by a fixed delay time DLₙ which is expressed by:${\text{DL}}_{\text{n}} {\text{= (n - (RN}}_{\text{n}} {\text{- RN}}_{\text{0}} {\text{)) * t}}_{\text{F}} \text{/ n}$ where t_{F} is the frame period of the first frame signal (DF₁), n is a maximum number of layers from the base station (B₀) to one of the terminal stations (Tₙ), RN₀ is the first repeater number (RN₀), and RNₙ is the third repeater number (RN₂) .

4. A time-division multiplex communication system according to claim 3, wherein each of the terminal stations (Tₙ) further includes delay adjusting means (38) for delaying the up burst signal (UB) inputted from the fixed delay means (37) by a delay time DLₙ corresponding to the distance from another of the group of repeater stations (Rₙ) which is a master with respect to the group of repeater stations (Rₙ).

5. A time-division multiplex communication system according to either claim 1 or claim 2, wherein each one of the repeater stations of the group of repeater stations (Rₙ) includes up burst signal generating means (15₁) for generating a second up burst signal (UB₁), fixed delay means (27₁) for delaying the second up burst signal (UB₁) generated by the up burst signal generating means (15₁) by a fixed delay time which is a function of the second repeater number (RN₁), and up burst multiplexing means (21₁) for multiplexing either the delayed second up burst signal (UB₁) inputted from the second fixed delay means (27₁) to either the up burst signal (UB) transmitted from the one of the slave stations (Tₙ,Rₙ) which is a slave with respect to the other stations in the group, or to the up burst signal (UB) transmitted from another of the repeater stations (Rₙ) which is a slave with respect to the other stations in the group, thereby producing a new up burst signal (UB).

6. A time-division multiplex communication system according to claim 5, wherein the fixed delay means (27₁) includes means for delaying the up burst signal (UB₁) by a second fixed delay time DLₘ which is expressed by:${\text{DL}}_{\text{m}} {\text{= (n - ((RN}}_{\text{m}} {\text{- RN}}_{\text{0}} {\text{)) * t}}_{\text{F}} \text{/ n}$ where t_{F} is a frame period of the first down frame signal (DF), n is a maximum number of layers from the base station (B₀) to one of the slave stations (Tₙ,Rₙ), RN₀ is the first repeater number (RN₀), and RNₘ is the second repeater number (RN₁).

7. A time-division multiplex communication system according to claim 5, wherein the up burst signal multiplexing means (21₁) includes second delay adjusting means (28₁) for delaying the new up burst signal (UB) by a delay time depending on a distance from either the base station (B₀) or another of the repeater stations (Rₙ) which is a master with respect to the other repeater stations (Rₙ).

## Patentansprüche

1. Zeitmultiplex-Kommunikationssystem mit: einer Basisstation (Bₒ) zum Übertragen eines ersten Abwärts-Rahmensignals (DF₁) zusammen mit einer ersten Übertragungsnunmer (RNₒ), einer Gruppe von Relaisstationen (Rₙ), durch die jeweils ein zweites Abwärts-Rahmensignal (DF₂) zusammen mit einer zweiten Übertragungsnummer (RN₁) übertragen wird, und einer Gruppe von Endgeräten (Tₙ), durch die jeweils ein Aufwärts-Burstsignal (UB) übertragen wird, das um eine feste Verzögerungszeit verzögert ist, die einer dritten Übertragungsnummer (RN₂) entspricht, die durch Addieren einer vorgegebenen Zahl zu einer zweiten Übertragungsnummer (RN₁) berechnet wird, die von einer Relaisstation (Rₘ) übertragen wird, die eine zugeordnete Hauptstation ist, wobei die Basisstation (Bₒ), die Gruppe von Relaisstationen (Rₙ) und die Gruppe von Endgeräten (Tₙ) in verschiedenen Schichten in einem hierarchischen Netz angeschlossen sind, wobei jede der Relaisstationen (Rₙ) eine Rahmensynchronisationserfassungseinrichtung (25₁) aufweist, um festzustellen, ob in der Gruppe von Relaisstationen (Rₙ) ein Rahmensynchronisations- oder ein Rahmenasynchronisationszustand vorhanden ist, eine Rückwärtsübertragungseinrichtung (23₁) zum Rückwärtsübertragen des von einem der Endgeräte (Tₙ) oder einer anderen der Relaisstationen (Rₙ), die bezüglich den Endgeräten oder den Relaisstationen eine Nebenstation ist, übertragenen Aufwärts-Burstsignals (UB), wenn durch die Rahmensynchronisationserfassungseinrichtung (25₁) festgestellt wird, daß in der Gruppe von RelaisStationen (Rₙ) ein Rahmenasynchronisationszustand vorhanden ist, und eine Einrichtung (26₁) zum Berechnen einer Übertragungsnummer, durch die eine zweite Übertragungsnummer (RN₁) in Abhängigkeit von der Anzahl der Schichten der zweiten Relaisstation von der Basisstation (Bₒ) basierend auf der ersten Übertragungsnummer (RNₒ) berechnet wird, wenn durch die Rahmensynchronisationserfassungseinrichtung (25₁) festgestellt wird, daß in der Gruppe von Relaisstationen (Rₙ) ein Rahmensynchronisationszustand vorhanden ist, und die zweite Übertragungsnummer (RN₁) der ersten Übertragungsnummer (RNₒ) unabhängig von der Anzahl der Schichten zwischen der zweiten Übertragungsnummer (RN₁) und der Basisstation (Bₒ) gleichgesetzt wird, wenn durch die Rahmensynchronisationserfassungseinrichtung (25₁) festgestellt wird, daß in der Gruppe von Relaisstationen (Rₙ) ein Rahmenasynchronisationszustand vorhanden ist.

2. Zeitmultiplex-Kommunikationssystem nach Anspruch 1, wobei die erste Übertragungsnummer (RNₒ) "0" ist, durch die Einrichtung (26₁) zum Berechnen einer Übertragungsnummer die zweite übertragungsnummer (RN₁) berechnet wird, indem zur von der Basisstation (Bₒ) übertragenen ersten Übertragungsnummer (RNₒ) oder zur von einer anderen Station der Gruppe von Relaisstationen (Rₙ), die bezüglich der Gruppe von Relaisstationen (Rₙ) eine Hauptstation ist, übertragenen zweiten Übertragungsnummer (RN₁) der Wert "1" addiert wird, wenn durch die Rahmensynchronisationserfassungseinrichtung (25₁) festgestellt wird, daß in der Gruppe von Relaisstationen (Rₙ) ein Rahmensynchronisationszustand vorhanden ist, wobei jedes der Endgeräte (Tₙ) eine Einrichtung (36) zum Berechnen einer Übertragungsnummer aufweist, durch die eine dritte Übertragungsnummer (RN₂) berechnet wird, indem zur von einer Station der Gruppe von Relaisstationen (Rₙ), die bezüglich der Gruppe von Relaisstationen (Rₙ) eine Hauptstation ist, übertragenen zweiten Übertragungsnummer (RN₁) der Wert "1" addiert wird.

3. Zeitmultiplex-Kommunikationssystem nach Anspruch 1 oder 2, wobei jedes der Endgeräte (Tₙ) eine Einrichtung (37) zum Aufprägen einer festen Verzögerung aufweist, um das Aufwärts-Burstsignal (UB) um eine feste Zeitverzögerung DLₙ zu verzögern, die dargestellt wird durch:${\text{DL}}_{\text{n}} {\text{= (n - (RN}}_{\text{n}} {\text{- RN}}_{\text{o}} {\text{)) x t}}_{\text{F}} \text{/n,}$ wobei t_{F} die Rahmenperiode des ersten Rahmensignals (DF₁), n eine maximale Anzahl von Schichten zwischen der Basisstation (Bₒ) und einem der Endgeräte (Tₙ), RNₒ eine erste Übertragungsnummer (RNₒ) und RNₙ die dritte Übertragungsnummer (RN₂) ist.

4. Zeitmultiplex-Kommunikationssystem nach Anspruch 3, wobei jedes der Endgeräte (Tₙ) außerdem eine Verzögerungseinstellungseinrichtung (38) zum Verzögern des von der Einrichtung (37) zum Aufprägen einer festen Verzögerung zugeführten Aufwärts-Burstsignals (UB) um eine Verzögerungszeit DLₙ aufweist, die dem Abstand von einer anderen Station der Gruppe von Relaissstationen (Rₙ) entspricht, die bezuglich der Gruppe von Relaisstationen (Rₙ) eine Hauptstation ist.

5. Zeitmultiplex-Kommunikationssystem nach Anspruch 1 oder 2, wobei jede Relaisstation der Gruppe von Relaisstationen (Rₙ) aufweist: eine Aufwärts-Burstsignalerzeugungseinrichtung (15₁) zum Erzeugen eines zweiten Aufwärts-Burstsignals (UB₁), eine Einrichtung (27₁) zum Aufprägen einer festen Verzögerung zum verzögern des durch die Aufwärts-Burstsignalerzeugungseinrichtung (15₁) erzeugten zweiten Aufwärts-Burstsignals (UB₁) um eine feste verzögerungszeit, die eine Funktion der zweiten Übertragungsnummer (RN₁) ist, und eine Aufwärts-Burst-Multiplexeinrichtung (21₁) zum Multiplexen des von der zweiten Einrichtung (27₁) zum Aufprägen einer festen Verzögerung zugeführten verzögerten zweiten Aufwärts-Burstsignals (UB₁) mit dem Aufwärts-Burstsignal (UB), das von der einen der Nebenstationen (Tₙ, Rₙ) übertragen wird, die bezüglich den anderen Stationen der Gruppe eine Nebenstation ist, oder mit dem Aufwärts-Burstsignal (UB), das von einer anderen der Relaisstationen (Rₙ) übertragen wird, die bezüglich den anderen Stationen der Gruppe eine Nebenstation ist, wodurch ein neues Aufwärts-Burstsignal (UB) erzeugt wird.

6. Zeitmultiplex-Kommunikationssystem nach Anspruch 5, wobei die Einrichtung (27₁) zum Aufprägen einer festen Verzögerung eine Einrichtung zum Verzögern des Aufwärts-Burstsignals (UB₁) um eine zweite feste Verzögerungszeit DLm aufweist, die dargestellt wird durch:${\text{DL}}_{\text{m}} {\text{= (n - (RN}}_{\text{m}} {\text{- RN}}_{\text{o}} {\text{)) x t}}_{\text{F}} \text{/n,}$ wobei t_{F} eine Rahmenperiode des ersten Abwärts-Rahmensignals (DF), n eine maximale Anzahl von Schichten zwischen der Basisstation (Bₒ) und einer der Nebenstationen (Tₙ, Rₙ), RNₒ die erste Übertragungsnummer (RNₒ) und RNₘ die zweite Übertragungsnummer (RN₁) ist.

7. Zeitmultiplex-Kommunikationssystem nach Anspruch 5, wobei die Aufwärts-Burstsignal-Multiplexeinrichtung (21₁) eine zweite Verzögerungseinstellungseinrichtung (28₁) zum Verzögern des neuen Aufwärts-Burstsignals (UB) um eine Zeitdauer aufweist, die von einem Abstand von der Basisstation (Bₒ) oder einer anderen der Relaisstationen (Rₙ) abhängt, die bezüglich den anderen Relaisstationen (Rₙ) eine Nebenstation ist.

## Revendications

1. Système de communication à multiplexage par répartition temporelle incluant : une station de base (Bₒ) pour transmettre un premier signal de trame de descente (DF₁) accompagné d'un premier numéro de répéteur prédéterminé (RN₀), un groupe de stations de répéteur (Rₙ) dont chacune transmet un second signal de trame de descente (DF₂) accompagné d'un second numéro de répéteur (RN₁) et un groupe de stations terminales (Tₙ) dont chacune est prévue pour transmettre un signal de salve de montée (UB) qui est retardé d'un temps de retard fixe correspondant à un troisième numéro de répéteur (RN₂) qui est calculé en additionnant un nombre prédéterminé à un second numéro de répéteur (RN₁) transmis à une station de répéteur (Rₘ) qui est une station maître respective, la station de base (B₀), le groupe de stations de répéteur (Rₙ,) et le groupe de stations terminales (Tₙ) étant connectés au niveau de différentes couches dans un réseau hiérarchique, chacune des stations de répéteur (Rₙ) incluant des moyens de détermination de synchronisation de trame (25₁) pour déterminer si oui ou non le groupe de stations de répéteur (Rₙ) est en synchronisation de trame ou en asynchronisation de trame, des moyens de boucle de retour (23₁) pour boucler en retour le signal de salve de montée (UB) transmis depuis soit l'une des stations terminales (Tₙ) soit une autre des stations de répéteur (Rₙ) qui est un esclave par rapport à l'une des stations terminales ou de répéteur, lorsque les moyens de détermination de synchronisation de trame (25₁) déterminent le groupe de stations de répéteur (Rₙ) comme étant en asynchronisation de trame et des moyens de calcul de numéro de répéteur (26₁) pour calculer un second numéro de répéteur (RN₁) dépendant du nombre de couches du second répéteur à partir de la station de base (B₀) sur la base du premier numéro de répéteur (RN₀) lorsque les moyens de détermination de synchronisation de trame (25₁) déterminent le groupe de stations de répéteur (Rₙ) comme étant en synchronisation de trame et pour établir le second numéro de répéteur (RN₁) de manière à ce qu'il soit égal au premier numéro de répéteur (RN₀) indépendamment du nombre de couches que le second numéro de répéteur (RN₁) présente à partir de la station de base (B₀) lorsque les moyens de détermination de synchronisation de trame (251) déterminent le groupe de stations de répéteur (Rₙ) comme étant en asynchronisation de trame.

2. Système de communication à multiplexage par répartition temporelle selon la revendication 1, dans lequel le premier numéro de répéteur (RN₀) est "0", les moyens de calcul de numéro de répéteur (26₁) calculant le second numéro de répéteur (RN₁) en additionnant "1" soit au premier numéro de répéteur (RN₀) transmis depuis la station de base (B₀) soit au second numéro de répéteur (RN₁) transmis depuis une autre station du groupe de stations de répéteur (Rₙ) qui est un maître par rapport au groupe de stations de répéteur (Rₙ) lorsque les moyens de détermination de synchronisation de trame (25₁) déterminent que le groupe de stations de répéteur (Rₙ) est en synchronisation de trame, chacune des stations terminales (Tₙ) incluant des moyens de calcul de numéro de répéteur (36) pour calculer le troisième numéro de répéteur (RN₂) en additionnant "1" au second numéro de répéteur (RN₁) transmis depuis une station du groupe de stations de répéteur (Rₙ) qui est un maître par rapport au groupe de stations de répéteur (Rₙ).

3. Système de communication à multiplexage par répartition temporelle selon la revendication 1 ou la revendication 2, dans lequel chacune des stations terminales (Tₙ,) inclut des moyens de retard fixe (37) pour retarder le signal de salve de montée (UB) d'un temps de retard fixe DLₙ, qui est exprimé par :${\text{DL}}_{\text{n}} {\text{= (n - (RN}}_{\text{n}} {\text{- RN}}_{\text{0}} {\text{)) * t}}_{\text{F}} \text{/ n}$ où t_{F} est la période de trame du premier signal de trame (DF₁), n est un nombre maximum de couches depuis la station de base (B₀) jusqu'à l'une des stations terminales (Tₙ), RN₀ est le premier numéro de répéteur (RN₀) et RNₙ est le troisième numéro de répéteur (RN₂).

4. Système de communication à multiplexage par répartition temporelle selon la revendication 3, dans lequel chacune des stations terminales (Tₙ) inclut en outre des moyens de réglage de retard (38) pour retarder le signal de salve de montée (UB) entré depuis les moyens de retard fixe (37) d'un temps de retard DLₙ correspondant à la distance depuis une autre station du groupe de stations de répéteur (Rₙ) qui est un maître par rapport au groupe de stations de répéteur (Rₙ).

5. Système de communication à multiplexage par répartition temporelle selon la revendication 1 ou la revendication 2, dans lequel chacune des stations de répéteur du groupe de stations de répéteur (Rₙ) inclut des moyens de génération de signal de salve de montée (15₁) pour générer un second signal de salve de montée (UB₁), des moyens de retard fixe (27₁) pour retarder le second signal de salve de montée (UB₁) généré par les moyens de génération de signal de salve de montée (15₁) d'un temps de retard fixe qui est une fonction du second numéro de répéteur (RN₁) et des moyens de multiplexage de salve de montée (21₁) pour multiplexer le second signal de salve de montée retardé (UB₁) entré depuis les seconds moyens de retard fixe (27₁) sur soit le signal de salve de montée (UB) transmis depuis l'une des stations esclaves (Tₙ, Rₙ) qui est un esclave par rapport aux autres stations du groupe soit le signal de salve de montée (UB) transmis depuis l'autre station des stations de répéteur (Rₙ) qui est un esclave par rapport aux autres stations du groupe pour ainsi produire un nouveau signal de salve de montée (UB).

6. Système de communication à multiplexage par répartition temporelle selon la revendication 5, dans lequel les moyens de retard fixe (27₁) incluent des moyens pour retarder le signal de salve de montée (UB₁) d'un second temps de retard fixe DLₘ qui est exprimé par :${\text{DL}}_{\text{m}} {\text{= (n - (RN}}_{\text{m}} {\text{- RN}}_{\text{0}} {\text{)) * t}}_{\text{F}} \text{/ n}$ où t_{F} est une période de trame du premier signal de trame de descente (DF), n est un nombre maximum de couches depuis la station de base (B₀) jusqu'à l'une des stations esclaves (Tₙ, Rₙ), RN₀ est le premier numéro de répéteur (RN₀) et RNₘ est le second numéro de répéteur (RN₁).

7. Système de communication à multiplexage par répartition temporelle selon la revendication 5, dans lequel les moyens de multiplexage de signal de salve de montée (21₁) incluent des seconds moyens de réglage de retard (28₁) pour retarder le nouveau signal de salve de montée (UB) d'un temps de retard dépendant d'une distance depuis soit la station de base (B₀) soit une autre des stations de répéteur (Rₙ) qui est un maître par rapport aux autres stations de répéteur (Rₙ).
